**Europäisches Patentamt**

**European Patent Office**

**Office européen des brevets**

(19)

(11) Veröffentlichungsnummer: **0 050 852**
**A1**

## (12) EUROPÄISCHE PATENTANMELDUNG

(21) Anmeldenummer: **81108766.7**

(22) Anmeldetag: **23.10.81**

(51) Int. Cl.³: **E 04 G 23/02**
**B 28 D 1/08**

(30) Priorität: **23.10.80 DE 3039984**

(43) Veröffentlichungstag der Anmeldung:
**05.05.82 Patentblatt 82/18**

(84) Benannte Vertragsstaaten:
**AT BE CH DE FR GB IT LI LU NL SE**

(71) Anmelder: **Haag, Reinhard**
**Hölderlinstrasse 42**
**D-7530 Pforzheim 8(DE)**

(71) Anmelder: **Bromm, Edmund**
**Max-Hueber-Strasse 9**
**D-8045 Ismaning(DE)**

(72) Erfinder: **Haag, Reinhard**
**Hölderlinstrasse 42**
**D-7530 Pforzheim 8(DE)**

(72) Erfinder: **Bromm, Edmund**
**Max-Hueber-Strasse 9**
**D-8045 Ismaning(DE)**

(74) Vertreter: **Abitz, Walter, Dr.-Ing. et al,**
**Abitz, Morf, Gritschneder P.O. Box 86 01 09**
**D-8000 München 86(DE)**

(54) **Verfahren zum nachträglichen Herstellen horizontaler Feuchtigkeitssperren in Mauerwerk und Sägeseil zur Verwendung dafür.**

(57) In das Mauerwerk wird eine horizontale Schnittfuge (1) gesägt, in die die Feuchtigkeitssperre eingebracht wird. Die Schnittfuge (1) wird mittels einer Seilsäge hergestellt. Das Sägeseil zur Verwendung bei diesem Verfahren enthält ein Trägerseil (10), auf dem Schleifkörper (11) und Distanzkörper (12) mit einer Zentralbohrung (13) angeordnet sind. Die Distanzkörper (12) bestehen aus hartem Material und die Endflächen der Schleifkörper (11) und/oder der Distanzkörper (12) verjüngen sich so, dass diese nur in einem schmalen Ringbereich um die Zentralbohrung (13) herum aneinander anliegen.

./...

EP 0 050 852 A1

FIG. 1

FIG.2

FIG. 6

### Verfahren zum nachträglichen Herstellen horizontaler Feuchtigkeitssperren in Mauerwerk und Sägeseil zur Verwendung dafür

Die Erfindung betrifft ein Verfahren zum nachträglichen Herstellen horizontaler Feuchtigkeitssperren in Mauerwerk, insbesondere zum Herstellen von horizontalen Schnittfugen. Die Erfindung betrifft ferner ein Sägeseil, das sich insbesondere zur Verwendung bei diesem Verfahren eignet.

Es ist bekannt, Beton und Mauerwerk bis zu einer Dicke von etwa 0,5 m mittels Kreissägen mit Diamantsägeblättern zu sägen. Die Befestigung dieser Kreissägen an alten Mauern bereitet jedoch große Schwierigkeiten. Außerdem sind Mauern alter Bauwerke häufig wesentlich dicker, so daß derartige Kreissägen nur in wenigen Einzelfällen zum Einsatz kommen können.

Es ist ferner bekannt, mittels Seilsägen Häuser zu trennen, z. B. um Schallbrücken zu verhindern. Die dabei verwendeten Seilsägen bestehen jedoch im wesentlichen aus einem einfachen Stahlseil, wobei zugegebene Eisensplitter als Schleifmittel dienen. Für horizontale Schnitte sind derartige Seilsägen nicht geeignet, da bei horizontal verlaufenden Schnittfugen kein Schleifmittel zugegeben werden kann; es würde innerhalb kürzester Zeit aus der Schnittfuge herausfallen.

Seilsägen finden ferner in Steinbrüchen Verwendung. Bei dem dabei verwendeten Sägeseil bestehen die Di-

0050852

stanzkörper aus Spiralfedern, Kautschuk oder anderem weichelastischem Material. Derartige Seilsägen sind zwar auch bei der Durchführung von horizontalen Schnitten im Mauerwerk einsetzbar, der Verschleiß ist jedoch sehr hoch. Dies dürfte darauf zurückzuführen sein, dass Mauerwerk im allgemeinen aus inhomogenem Material, nämlich Mauersteinen und Mörtel besteht und dadurch diese Seilsägen einer ununterbrochenen Folge von ruckartigen Belastungen ausgesetzt werden, die zu einem starken Verschleiss der Distanzkörper führt.

Der Erfindung liegt die Aufgabe zugrunde, ein Verfahren zum Herstellen horizontaler Feuchtigkeitssperren in Mauerwerk beliebiger Stärke zu schaffen.

Diese Aufgabe wird dadurch gelöst, dass das Mauerwerk unter Verwendung einer Seilsäge durchtrennt wird.

Gegenstand der Erfindung ist ferner ein insbesondere für dieses Verfahren geeignetes Sägeseil, bei dem die Distanzkörper aus hartem Material bestehen und die Schleifkörper und die Distanzkörper nur in einem schmalen Ringbereich um ihre Zentralbohrung aneinander anliegen.

Das Einbringen einer nachträglichen horizontalen Feuchtigkeitssperre kann in der Weise erfolgen, dass das Mauerwerk in Abschnitten aufgeteilt wird, die abwechselnd in zwei Durchgängen horizontal in der gewünschten Höhe aufgesägt werden. Die Breite der einzelnen aufgesägten Abschnitte bestimmt sich nach statischen Erfordernissen, so dass die Standsicherheit des Gebäudes zu keiner Zeit gefährdet wird. Die im ersten Durchgang aufgesägten Abschnitte besitzen etwa die gleiche Breite wie die zunächst stehenbleibenden Abschnitte, die dann im zweiten Durchgang aufgesägt werden. Sobald einer oder mehrere Abschnitte gesägt sind, wird sogleich die horizontale Feuchtigkeitssperre eingebracht. Nach dem Ausfüllen der im ersten
Durchgang aufgesägten Abschnitte werden dann im zweiten
Durchgang die dazwischenliegenden Abschnitte aufgesägt
und mit einer horizontalen Feuchtigkeitssperre versehen.
Ein einzelner Abschnitt wird dabei in der Weise aufgesägt,
dass zunächst am linken und rechten Ende des Abschnittes
das Mauerwerk durchbohrt wird. Das Sägeseil wird durch
die eine Bohrung hindurchgeführt und durch die andere
Bohrung wieder herausgeführt, und endlos gemacht. Das
Sägeseil wird durch eine Antriebsscheibe durch die
beiden Bohrungen gezogen und steht dabei unter Spannung,
indem die Antriebsscheibe pneumatisch oder hydraulisch
von dem Mauerwerk weggedrückt wird, so dass das Sägeseil
diesen Abschnitt in horizontaler Richtung durchtrennt.

Damit die Bohrlöcher zum Einziehen des Sägeseils für den
zweiten Durchgang wieder verwendet werden können und
auch im Bereich der Bohrlöcher eine Feuchtigkeitssperre
vorhanden ist, wird vorzugsweise ein Doppelrohr in die
Bohrlöcher eingesetzt. Das Sägeseil wird dann jeweils
durch das den betreffenden Abschnitt begrenzende Rohr
des Doppelrohrs hindurchgeführt, so dass das Doppelrohr
als Verbindung zwischen den einzelnen Abschnitten dient.

Damit keine Setzungen des Mauerwerks entstehen können,
wird in die Schnittfuge möglichst rasch eine Feuchtigkeitssperre aus einer Isolierfolie und eingepresstem
oder -gefülltem Isoliermörtel eingebracht. Da der Isoliermörtel sehr rasch abbindet, können im allgemeinen nach
einem Tag bereits die Zwischenabschnitte herausgesägt
werden. Der Aufbau der Feuchtigkeitssperre kann nach den
Erfordernissen des Einzelfalls erfolgen. Zweckmäßigerweise
wird zunächst z.B. eine einschichtige Isolierfolie in den
jeweiligen Abschnitt eingebracht.

Als Isolierfolie eignet sich insbesondere ein 0,4 bis 0,6 mm starkes Chromnickelmolybdänstahlblech. Bei ihm ist die Gefahr nachträglicher Setzungen kaum gegeben. 3 bis 4 mm starke bitumenbeschichtete Blei- oder Alufolien sind ebenfalls geeignet.

Vorzugsweise wird das Verfahren kontinuierlich durchgeführt. Die Mauer wird dabei in Längsrichtung durchschnitten, d. h. das Antriebsaggregat mit der Antriebsscheibe wird am einen Ende der Mauer aufgestellt und das Sägeseil wird um die gesamte Mauer herumgeführt und sägt die Mauer vom anderen Ende her durch. Bei Quermauern werden Mauerbohrungen durchgeführt, durch die dann das Sägeseil läuft. Bei diesem kontinuierlichen Verfahren muß dafür Sorge getragen werden, dass sich der bereits durchgesägte Teil der Mauer nicht setzt, d.h. die Schnittfuge muß vom anderen Ende her möglichst rasch verfüllt werden. Das Ausfüllen geschieht in der Weise, dass zunächst die Isolierfolie aus Kunststoff oder Metall mit einer Breite von etwa 0,5 oder 1 m in die Schnittfuge eingeschoben wird und dann das Mauerwerk sogleich durch Keileinrichtungen abgestützt wird. Die Keileinrichtungen können einfach aus zwei sich in entgegengesetzter Richtung verjüngenden Platten bestehen. Vorzugsweise bestehen sie aus zwei keilförmig ausgebileten Platten, zwischen denen ein sich in entgegengesetzter Richtung verjüngender Keil liegt. Diese drei Teile werden zusammen in die Schnittfuge eingesetzt und der Keil wird dann mittels eines Drahtes oder auf andere Weise angezogen, so dass er die beiden keilförmigen Platten auseinanderdrückt. Durch mehrere derartige Keileinrichtungen wird das Mauerwerk innerhalb der Schnittfuge abgestützt, so dass eine Senkung des Mauerwerks verhindert wird. Anschliessend wird der Isoliermörtel eingebracht. Da die Keileinrichtungen das Mauerwerk abstützen, kann das Mauerwerk kontinuierlich weiter durchtrennt werden, wobei jeweils nach einer Schnittfuge von etwa 1 m wieder ein Stück Kunststoff- oder Metallfolie eingeführt wird, das Mauerwerk durch Keileinrichtungen abgestützt wird und Isoliermörtel eingefüllt wird. Da die Schnittfugen im allgemeinen sehr glatt sind, bereitet das Einfügen der Keileinrichtungen keine besonderen Schwierigkeiten. Die Keil- oder Abstützungseinrichtungen aus den beiden keilförmigen Platten und dem dazwischen liegenden Keil, können dabei bereits zusammen mit der Isolierfolie in die Schnittfuge eingeschoben werden. Eine der keilförmigen Platten kann dabei auf der Isolierfolie festgeklebt sein. Die keilförmigen Platten können auf ihren Außenseiten, d. h. den mit den Schnittfugenflächen in Berührung kommenden Seiten mit Rillen oder Zähnen versehen sein, damit sie sich beim Anziehen des Keils nicht verschieben. Die Keiloder Abstützungseinrichtungen bestehen aus Stahl oder einem anderen harten, druckfesten Werkstoff und sie werden in einer ausreichenden Anzahl pro Fläche des Mauerwerks verwendet, um eine Senkung des Mauerwerks zu verhindern.

Bei einer besonders bevorzugten Ausführungsform der kontinuierlichen Verfahrensführung wird das Sägeseil ähnlich wie bei der abschnittsweisen Verfahrensführung durch zwei Bohrungen um einen relativ schmalen Mauerabschnitt gelegt. Die Besonderheit besteht dabei darin, daß das Seil auf der der Antriebseinrichtung abgewandten Seite des Mauerwerkes nicht an dem Mauerwerk anliegt, sondern um eine Rolle läuft und diese Rolle und die Antriebseinrichtung parallel zum Mauerwerk verschiebbar sind. Der Vorteil dieser Verfahrensführung besteht insbesondere darin, daß das Sägeseil nur mit dem einen, gerade verlaufenden Teilstück zwischen Antriebseineinrichtung und Umlenkrolle sägt. Das Sägeseil liegt nicht mehr in seinem gekrümmten Bereich an dem Mauerwerk an. Dadurch ist der Verschleiß geringer und es entfällt die Notwendigkeit, das Seigeseil von Zeit zu Zeit zu kürzen, wie es bei der vorausgehend beschriebenen ersten Ausführungsform des kontinuierlichen Verfahrens der Fall ist. Die Antriebseinrichtung wird zweckmäßigerweise auf Schienen parallel zum Mauerwerk geführt. Die Umlenkrolle kann ebenfalls durch Schienen geführt sein oder einfach durch Rollen auf dem Mauerwerk fahren.

Stahlseile, insbesondere diamantbestückte, oder Kunststoffseile sind als Sägeseile bei dem erfindungsgemäßen Verfahren grundsätzlich geeignet. Sie unterliegen jedoch einem hohen Verschleiß oder haben eine zu geringe Schnittgeschwindigkeit. Eine besondere Schwierigkeit beim Durchsägen von Mauerwerk in horizontaler Richtung besteht dabei darin, dass die Seile im Mauerwerk Bahnen mit sehr kleinem Krümmungsradius durchlaufen. Die in Steinbrüchen verwendeten Seilsägen, bei denen die Schleifkörper und die Distanzkörper ebene Flächen aufweisen, mit denen sie aneinander anliegen, verschleissen deshalb sehr rasch, wobei häufig die Schleifkörper oder Distanzkörper brechen. Erfindungsgemäss haben die Schleifkörper und/oder Distanzkörper daher kalottenförmige oder kegelstumpfförmige Endflächen, so dass sie nur mit dem an die Zentralbohrung angrenzenden schmalen Ringbereich aneinanderliegen. Zwischen die Distanzkörper und Schleifkörper können Beilagscheiben eingefügt sein. Ohne gegenseitige Verschiebung der Schleifkörper und Distanzkörper kann ein solches Sägeseil sehr kleine Krümmungsradien durchlaufen, ohne dass sich diese Körper auf dem Seil gegeneinander verschieben. Bei den in Steinbrüchen üblichen Sägeseilen führt die gegenseitige Verschiebung der Distanzkörper und Schleifkörper zu einer Lockerung dieser Körper auf dem Seil. Dies ist insbesondere deshalb nachteilig, weil beim Sägen von Mauerwerk, das im allgemeinen inhomogen aufgebaut ist, die Schleifkörper dadurch beim Auftreffen auf härterem Gestein zunächst etwas zurückgehalten werden und dann ruckartig weitergerissen werden. Dies bedingt eine zusätzliche Belastung der Schleifkörper. Das erfindungsgemäße Sägeseil ist auch für andere Verwendungen geeignet, z.B. in Steinbrüchen oder für vertikale Schnittfugen in Mauerwerk.

Die Antriebseinrichtung für das Sägeseil ist von üblicher Bauart, wie sie aus Steinbrüchen bekannt ist.

Ausführungsbeispiele der Erfindung werden nachfolgend anhand der Zeichnung näher erläutert. Es zeigen:

Fig. 1    die Frontansicht einer Hausmauer mit der horizontal verlaufenden Schnittfuge;

Fig. 2    den Grundriss einer Mauer mit der Anordnung der Seilsäge und den einzelnen Abschnitten;

Fig. 3    einen Ausschnitt aus Fig. 2, wobei ein Abschnitt teilweise durchgesägt ist;

Fig. 4    die Anordnung der Seilsäge beim kontinuierlichen Sägen einer Schnittfuge in Längsrichtung des Mauerwerks;

Fig. 5    die Keileinrichtung in einer Schnittfuge

Fig. 6 und 7    zwei Ausführungsformen des Sägeseils und

Fig. 8 und 9 die Anordnung der Umlenkrolle und der Antriebseinrichtung bei einer weiteren Ausführungsform zur kontinuierlichen Verfahrensführung.

Zum nachträglichen Einbringen einer horizontalen Feuchtigkeitssperre ist es erforderlich, eine Schnittfuge 1 in der Außenmauer eines Gebäudes oder allgemein im Mauerwerk herzustellen. Die Schnittfuge 1 liegt im allgemeinen in einer horizontalen Ebene, sie kann jedoch auch in einem Winkel zur Horizontalen verlaufen, solange dadurch nicht die Gefahr einer Verschiebung des Mauerwerks entsteht. Die Schnittbreite hängt von der Dicke des verwendeten Sägeseils ab und beträgt daher bei Kunststoff-Sägeseilen einen oder wenige Millimeter und bei Sägeseilen mit diamantbestückten Schleifkörpern etwa 10 bis 15 mm.

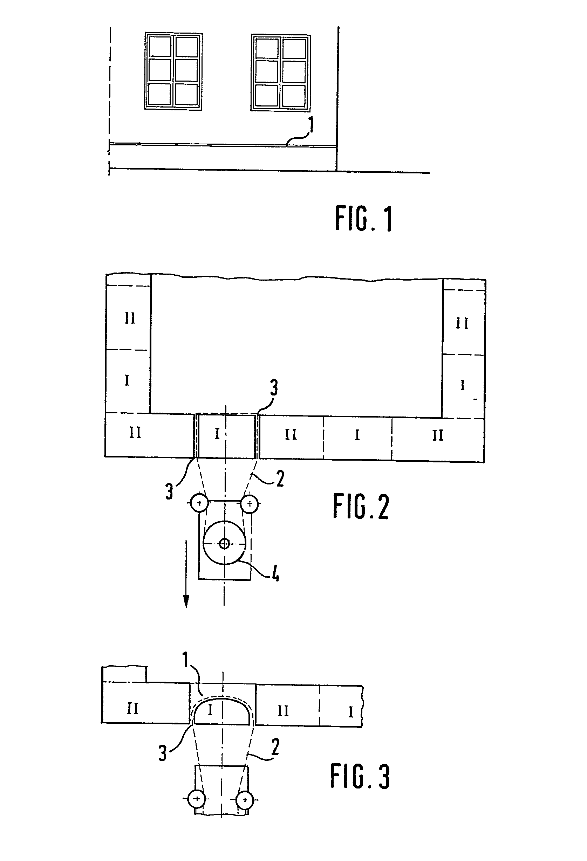

Beim abschnittweisen Zersägen der Mauer wird die Mauer, wie in Fig. 2 gezeigt, in Abschnitte aufgeteilt, die hier abwechselnd mit I und II bezeichnet sind. Beim ersten Durchgang werden die Abschnitte I durchsägt und mit einer Feuchtigkeitssperre versehen. Zum Herumführen des Sägeseils 2 werden Bohrungen 3 entsprechenden Durchmessers in der Ebene der gewünschten Schnittfuge 1 in dem Mauerwerk hergestellt. In die Bohrungen 3 wird jeweils ein Doppelrohr aus zwei parallel nebeneinanderliegenden Rohren eingeschoben und ein Ende des Sägeseiles 2 wird dann von Hand durch jeweils das an den betreffenden Abständen angrenzende Rohr des Doppelrohres um diesen Abschnitt herumgeführt und mit dem anderen Ende verschraubt, so daß das Sägeseil 2 endlos ist. Mittels einer Antriebsscheibe 4, die hydraulisch oder pneumatisch von dem Mauerwerk weggedrückt wird, so dass das Sägeseil 2 unter Spannung steht, wird dieses dann in Umlauf versetzt, so dass es den betreffenden Mauerabschnitt heraussägt. In Fig. 3 ist dieser Abschnitt des Mauerwerks zu einem Zeitpunkt gezeigt, in dem er etwa zur Hälfte herausgesägt ist.

Zu Beginn der Sägearbeit an einem Abschnitt können sich Schwierigkeiten dadurch ergeben, daß das Sägeseil am Ende des Rohres bzw. der Bohrung 3 rechtwinklig umgelenkt wird und parallel zum Mauerwerk an der von der Antriebseinrichtung abgewandten Seite der Mauer verläuft. Diese rechtwinklige Umlenkung kann selbst bei dem erfindungsgemäßen Sägeseil Schwierigkeiten bereiten. Sie können dadurch gelöst werden, daß der rechte Winkel am Austritts- bzw. Eintrittsende der Bohrung von Hand abgerundet wird, indem das Sägeseil zunächst von Hand etwas hin- und hergezogen wird. Eine andere Möglichkeit besteht darin, auf der der Antriebseinrichtung abgewandten Seite des Mauerwerkes zwischen diesem und dem Sägeseil einen größeren Holzklotz einzuschieben, so daß das Sägeseil nicht einen rechten Winkel sondern nur einen stumpfen Winkel durchläuft. Statt des Holzklotzes kann auch eine Umlenkrolle verwendet werden, um das Sägeseil auf dieser Mauerseite von dem Mauerwerk abzuheben. Sobald der rechte Winkel durch das Sägeseil abgerundet ist, kann der Holzklotz bzw. die Umlenkrolle entfernt werden.

Um ein Absenken des Mauerwerks zu verhindern, wird nach dem Heraussägen eines Abschnittes I nicht ein angrenzender Abschnitt II herausgesägt, sondern der übernächste Abschnitt, der hier wieder mit I bezeichnet ist. Die Abschnitte I werden danach mit einer Feuchtigkeitssperre versehen, die aus einer Metalloder Kunststoffolie und dem eingefüllten Isoliermörtel besteht. Sobald der

Isoliermörtel genügend abgebunden hat, und eine ausreichende Druckfestigkeit erreicht hat, werden die stehengelassenen Abschnitte II herausgesägt, wobei das Sägeseil 2 nunmehr durch die anderen Rohre der Doppelrohre geführt wird.

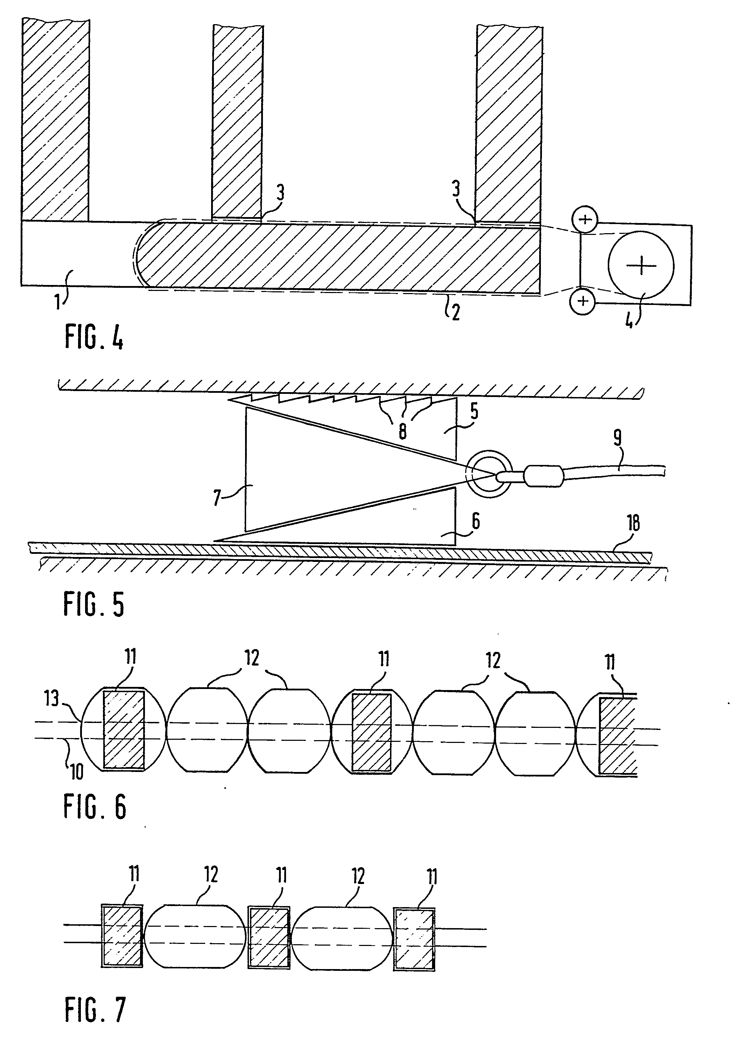

Beim Durchschneiden einer Mauer in Längsrichtung steht die Antriebseinrichtung der Sielsäge am einen Ende der Mauer und wird die Mauer vom anderen Ende her durchgesägt, wie dies in Fig. 4 gezeigt ist. Sobald die Schnittfuge, in Längsrichtung der Mauer gemessen, eine Länge von z.B. etwa 1 m aufweist, wird ähnlich wie im Zusammenhang mit dem abschnittsweisen Vorgehen gemäss Fig. 1 bis 3 die Feuchtigkeitssperre eingebracht. Die Gefahr einer Setzung des Mauerwerks ist bei der vorliegenden Verfahrensvariante jedoch grösser und es müssen nach dem Einschieben der Metall- oder Kunststoffolie 18 Keileinrichtungen zur Abstützung des Mauerwerks in die Schnittfuge 1 eingebracht werden. Eine derartige Keileinrichtung ist in Fig. 5 gezeigt. Sie besteht aus einer keilförmigen Oberplatte 5, einer keilförmigen Unterplatte 6 und einem dazwischen liegenden Keil 7. Die Oberplatte 5 und die Unterplatte 6 können auf ihrer Ober- bzw. Unterseite mit einer entgegen der Einschubrichtung zeigenden Zahnung 8, Spreizfingern oder dergleichen versehen sein, die entgegen der Einschubrichtung zeigen. Die Keileinrichtung wird gespreizt, in dem auf den Keil 7 mittels einer an seiner Spitze befestigten Schnur 9 eine entgegen der Einschubrichtung zeigende Zugkraft ausgeübt wird. Mehrere derartige Keileinrichtungen werden entsprechend den statischen Erfordernissen so innerhalb der Schnittfuge 1 angeordnet, daß sie das Mauerwerk gleichmässig abstützen und eine Senkung verhindern.

Um das Sägeseil 2 um die Mauer herumführen zu können, werden beim Zusammentreffen dieser Mauer mit anderen Mauern Bohrungen 3 hergestellt, durch die das Seilende geführt werden kann. Die Antriebsscheibe 4 wird wieder hydraulisch oder pneumatisch in Längsrichtung der Mauer von dem ersten Mauerende weggedrückt. Da sich der Abstand zwischen Antriebsscheibe 4 und dem ersten Mauerende entsprechend dem Fortgang der Sägearbeit und dem Längerwerden der Schnittfuge 1 vergrössert, muss von Zeit zu Zeit entweder das Sägeseil 2 verkürzt werden, damit der Abstand zwischen Antriebsscheibe 4 und dem ersten Mauerende nicht grösser wird als die Reichweite der pneumatischen oder hydraulischen Einrichtung, die die Antriebsscheibe 4 vom ersten Mauerende wegdrückt, oder muß die Antriebseinrichtung nach jedem Schnitt von ca. 1 m um dieses Schnittmaß zurückgestellt werden.

Das beim Herstellen der Schnittfuge anfallende Gesteins- und Mauermehl würde ohne besondere Maßnahmen die Schnittfuge zusetzen und müsste dann herausgekratzt werden, was insbesondere bei dicken Mauern sehr mühsam sein kann. Zweckmäßigerweise wird daher die Schnittfuge ständig mittels eines Hochdruck - Wasserstrahles gereinigt, wodurch zugleich das Sägeseil 2 gekühlt wird. Das Entfernen des Gesteins- und Mauermehls und das Kühlen des Sägeseils 2 kann auch durch einen Luftsstrahl geschehen.

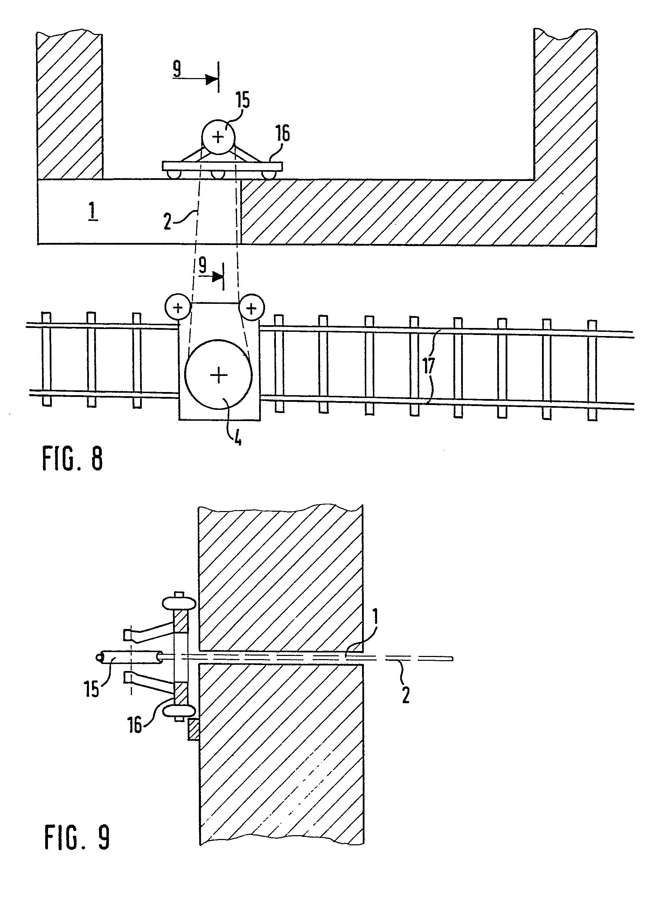

Eine weitere Möglichkeit zur kontninuierlichen Verfahrensführung ist in den Figuren 8 und 9 dargestellt. Das Sägeseil 2 wird dabei ähnlich wie bei dem in den Figuren 2 und 3 dargestellten abschnittsweisen Verfahren durch zwei Bohrungen 3 um einen Abschnitt des Mauerwerks gelegt. Auf der von der Antriebseinrichtung abgewandten Seite des Mauerwerks läuft das Sägeseil 2 um eine Umlenkrolle 15.

Die Antriebseinrichtung und die Umlenkrolle 15 werden parallel zu der Mauer verschoben, so daß die Mauer in einem kontinuierlichen Arbeitsgang über ihre gesamte Länge aufgeschnitten werden kann. Die Antriebseinrichtung ist dazu zweckmäßigerweise auf parallel zur Mauer verlaufenden Schienen 17 geführt. Ebenso kann die Umlenkrolle 15 dazu auf einem schienengeführten Untergestell 16 befestigt sein, das mittels Gummirollen auf der Mauer fährt oder ebenfalls schienengeführt ist. Ein Vorteil bei diesem Verfahren ist, daß nur der gerade verlaufende Teil des Sägeseils 2 zwischen Umlenkrolle 15 und Antriebsscheibe 4 mit dem Mauerwerk in Berührung kommt und daß das zweite gerade verlaufende Teilstück des Sägeseils, das sich in dem bereits gesägten Teil der Schnittfuge befindet, das dort angesammelte Gesteins- und Mauermehl aus der Schnittfuge herausschiebt.

Zur Verwendung bei den oben geschriebenen Verfahren eignen sich grundsätzlich alle üblichen Sägeseile für Gestein und Mauerwerk, z. B. Stahlseile, diamantbestückte Stahlseile, Kunststoffseile. Ein besonderes Problem ergibt sich bei den erfindungsgemäßen Verfahren dadurch, daß Mauerwerk in der Materialzusammensetzung im allgemeinen inhomogen ist, da Ziegel, Sandstein, Kalkstein oder dergleichen mit Mörtel abwechselt, und dadurch, dass das Sägeseil 2 sehr enge Kurven durchlaufen muß. Diese Schwierigkeiten werden durch das in Fig. 6 dargestellte Sägeseil überwunden. Es besteht aus einem Trägerseil 10 von etwa 5 mm Durchmesser, auf dem Schleifkörper 11 und Distanzkörper 12 aufgereiht sind, die eine Zentralbohrung 13 zur Durchführung des Trägerseils 10 besitzen. Die Schleifkörper 11 und die Distanzkörper 12 haben zylindrische Umfangsflächen und der Durchmesser der Schleifkörper 11 und der Distanzkörper 12 beträgt zwischen etwa 10 und 15 mm. Die zylindrischen Umfangsflächen der Schleifkörper 11 sind diamantbeschichtet mit einer Nutzstärke von etwa 1 bis 2 mm. Die Schleifkörper sind gesintert oder galvanisch belegt. Die Distanzkörper 12 weisen den gleichen Durchmesser wie die Schleifkörper 11 auf und bestehen aus einem Material, das sich gleichschnell oder schneller als die Schleifkörper 11 abnutzt. Im allgemeinen liegen zwischen zwei Schleifkörpern 11 ein bis vier, im Normalfall zwei Distanzkörper 12.

Die Endflächen der Schleifkörper 11 und der Distanzkörper 12 sind nicht eben, sondern verjüngen sich kalottenförmig oder kegelstumpfförmig, so dass die Distanzkörper 12 und der Schleifkörper 11 nur in dem schmalen Ringbereich, der die Zentralbohrung 13 umgibt, aneinander anliegen. Die Gesamtlänge der Schleifkörper und der Distanzkörper 12, d. h. die Länge der zylindrischen Umfangsfläche und der kalottenförmigen Endflächen beträgt etwa 10 oder 12 mm, wobei etwa die Hälfte auf die zylindrische Umfangsfläche entfällt und je ein Viertel auf die Endflächen.

Dadurch, dass die Schleifkörper 11 und die Distanzkörper 12 nur in dem schmalen, die Zentralbohrung 13 umgebenden Ringbereich aneinander anliegen, ist das Sägeseil 2 insgesamt sehr gelenkig und können die Schleif- und die Distanzkörper sehr eng auf dem Trägerseil 10 angeordnet werden, so dass sie sich nicht in Längsrichtung des Trägerseils 10 verschieben können. Eine Verschiebung der Schleifkörper 11 oder der Distanzkörper 12 hätte z. B. bei inhomogenem Mauerwerk zur Folge, dass sie durch besonders hartes Steinmaterial zurückgehalten werden und dann vom Trägerseil 10 ruckartig mitgerissen werden. Diese ruckartige Belastung verkürzt die Lebensdauer des Sägeseils 2.

Die Schleifkörper 11 bestehen aus Sintermetall und die Zylinderumfangsfläche ist diamantbeschichtet, gesintert oder galvanisch belegt. Die Distanzkörper bestehen aus einem harten Werkstoff, wie Metall, Hartkunststoff, Glas oder dergleichen. Das Sägeseil 2 ist an den Enden mit Gewindestücken versehen, so dass die Seilenden zusammengeschraubt und das Sägeseil dadurch endlos gemacht werden kann. Muss das Sägeseil 2 verkürzt werden, wie bei dem in Fig. 4 dargestellten Verfahren, so verwendet man ein Sägeseil 2, das aus mehreren Teilstücken zusammengesetzt ist, so dass zum Verkürzen ein Teilstück herausgenommen werden kann.

<u>P a t e n t a n s p r ü c h e</u>

1. Verfahren zum nachträglichen Herstellen horizontaler Feuchtigkeitssperren in Mauerwerk, wobei eine horizontale Schnittfuge (1) gesägt wird, in die die Feuchtigkeitssperre eingebracht wird, dadurch gekennzeichnet,

dass die Schnittfuge (1) mittels einer Seilsäge hergestellt wird.

2. Verfahren nach Anspruch 1, dadurch gekennzeichnet, dass das Mauerwerk in mehreren Durchgängen abschnittsweise durchtrennt und mit einer Feuchtigkeitssperre versehen wird, wobei die in den einzelnen Durchgängen durchsägten Abschnitte gegeneinander versetzt sind, und wobei zum Herstellen der Schnittfuge (1) in einem Abschnitt Bohrungen (3) in das Mauerwerk gemacht werden, um das Sägeseil (2) durch die Bohrungen (3) um den betreffenden Abschnitt des Mauerwerks zu legen.

3. Verfahren nach Anspruch 1, dadurch gekennzeichnet, dass das Mauerwerk in Längsrichtung von einem Ende her durchsägt wird, wobei die Schnittfuge (1) beginnend an dem einen Längsende zum anderen Längsende der Mauer durchgeführt wird und von dem einen Ende her die Schnittfuge (1) kontinuierlich oder in kurzen Abschnitten mit einer Feuchtigkeitssperre versehen wird.

4. Verfahren nach Anspruch 3, dadurch gekennzeichnet, dass nach dem Herstellen eines Teils der Schnittfuge (1) eine Metall- oder Kunststoffolie oder eine sonstige feuchtigkeitssperrende Einlage in die Schnittfuge (1) eingebracht wird und dass das Mauerwerk dann durch gleichmässig in der Schnittfuge (1) verteilte Keileinrichtungen (5 bis 8) abgestützt wird, die nach ihrer Einbringung in die Schnittfuge (1) gespreizt oder ge- spannt werden.

5. Sägeseil, insbesondere zur Verwendung bei dem Verfahren nach einem der Ansprüche 1 bis 4, mit einem Trägerseil (10), auf dem Schleifkörper (11) und Distanzkörper (12) mit einer Zentralbohrung (13) angeordnet sind, dadurch gekennzeichnet,

dass die Distanzkörper (12) aus hartem Material bestehen und dass sich die Endflächen der Schleifkörper (11) und/oder der Distanzkörper (12) in der Weise verjüngen, dass diese nur in einem schmalen Ringbereich um die Zentralbohrung (13) herum aneinander anliegen.

FIG. 1

FIG.2

FIG.3

FIG. 4

FIG. 5

FIG. 6

FIG. 7

FIG. 8

FIG. 9

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 651 761 (L. LACHER)<br>* Fig. 1,2 * | 1 |
| | DE - C - 1 046 292 (D. VAN OS)<br>* Ansprüche 1 bis 3; Fig. 1 bis 3 * | 4 |
| | DE - A - 1 951 480 (D.H.G. PROWSE)<br>* Ansprüche 1,2,8, 13 bis 15, 17,20;<br>Fig. 1 bis 4 * | 5 |
| A | DE - C - 188 863 (H. GEYER)<br>* ganzes Dokument * | |
| A | CH - A - 219 888 (J. BOHLI)<br>* Fig. 1 bis 9 * | |

KLASSIFIKATION DER ANMELDUNG (Int. Cl.3)

E 04 G 23/02
B 28 D 1/08

RECHERCHIERTE SACHGEBIETE (Int. Cl.3)

E 04 G 23/00
B 28 D 1/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 12-01-1982 | v. WITTKEN |